# EUROPEAN PATENT APPLICATION

(11) **EP 4 269 351 A1**
(43) Date of publication of application: **01.11.2023**
(21) Application number: 21910063.3
(22) Date of filing: 17.11.2021
(51) Int. Cl.: C01G 25/00, B01J 23/63, B01J 32/00, B01J 37/03, B01J 37/04

(54) **COMPOSITE OXIDE AND METHOD FOR PRODUCING SAME**

(30) Priority: 24.12.2020 WO PCT/JP2020/048560
(71) Applicant: Mitsui Mining & Smelting Co., Ltd., Shinagawa-ku Tokyo 141-8584 (JP)
(72) Inventor: WATANABE Satoshi, Ageo-shi, Saitama 362-0025 (JP); NAGAO Yuki, Ageo-shi, Saitama 362-0025 (JP); YAMAGUCHI Michitaka, Ageo-shi, Saitama 362-0025 (JP)
(74) Representative: Novagraaf Technologies
(86) International application number: PCT/JP2021/042322
(87) International publication number: WO 2022/137910

(57) **Abstract**

An object of the present invention is to provide a cerium oxide (CeO₂)-zirconium oxide (ZrO₂)-aluminum oxide (Al₂O₃)-based complex oxide having an improved heat resistance and a method of producing the complex oxide, and the present invention provides a complex oxide containing a cerium element, a zirconium element, an aluminum element, and optionally a rare earth metal element other than a cerium element, wherein a specific surface area measured by a BET method after heat treatment in an air atmosphere at 1000°C for 25 hours is 60 m²/g or more, and a method of producing the complex oxide.

## Description

### FIELD OF THE INVENTION

The present invention relates to a complex oxide containing a cerium element, a zirconium element, and an aluminum element, and a method of producing the complex oxide.

### BACKGROUND ART

Exhaust gas emitted from an internal combustion engine of an automobile, a motorcycle or the like contains harmful components, such as hydrocarbons (HC), carbon monoxide (CO), and nitrogen oxide (NOx). As an exhaust gas purification catalyst that purifies and detoxifies these harmful components, a three-way catalyst having a catalytic activity to oxidize HC and CO and convert them to water and carbon dioxide, as well as to reduce NOx and convert it to nitrogen, has been used.

To mitigate fluctuations in the oxygen concentration in the exhaust gas and to efficiently purify HC, CO, NOx, and the like, a material having an oxygen storage capacity (OSC) (hereinafter sometimes referred to as "OSC material"), such as a powder of cerium oxide (CeO₂)-zirconium oxide (ZrO₂)-based complex oxide, has been used as a constituent material of a three-way catalyst. It should be noted that the expression "capacity to absorb and release oxygen" may be used herein, and the "capacity to absorb and release oxygen" is synonymous with "oxygen storage capacity."

To improve the exhaust gas purification performance of an exhaust gas purification catalyst, it is required to improve the heat resistance of OSC materials and maintain the specific surface area even when exposed to high-temperature exhaust gas.

As the technology to improve the heat resistance of OSC materials, the technology to add an aluminum element to a cerium oxide (CeO₂)-zirconium oxide (ZrO₂)-based complex oxide so as to result in a cerium oxide (CeO₂)-zirconium oxide (ZrO₂)-aluminum oxide (Al₂O₃)-based complex oxide (for example, Patent Documents 1 to 4).

### CITATION LIST

### PATENT DOCUMENTS

Patent Document 1: JP 2007-268470 A
Patent Document 2: JP 2014-534938 A
Patent Document 3: JP 2014-522801 A
Patent Document 4: JP 2015-521538 A

### SUMMARY OF THE INVENTION

However, further improvement in heat resistance of cerium oxide (CeO₂)-zirconium oxide (ZrO₂)-aluminum oxide (Al₂O₃)-based complex oxide is required.

An object of the present invention is to provide a cerium oxide (CeO₂)-zirconium oxide (ZrO₂)-aluminum oxide (Al₂O₃)-based complex oxide having an improved heat resistance, and a method of producing the complex oxide.

To achieve the object described above, the present invention provides a complex oxide containing a cerium element, a zirconium element, an aluminum element, and optionally a rare earth metal element other than a cerium element, wherein the complex oxide has a specific surface area of 60.0 m²/g or more, and wherein the specific surface area is measured by a BET method after heat treatment in an air atmosphere at 1000°C for 25 hours.

Further, the present invention provides a method of producing a complex oxide, the method including the following steps of:
(a) preparing for a raw material solution containing water, a cerium salt, a zirconium salt, aluminum compound particles, and optionally a rare earth metal salt other than a cerium salt;
(b) adding a precipitant to the raw material solution, thereby forming a precipitate containing a cerium element, a zirconium element, an aluminum element, and optionally a rare earth metal element other than a cerium element; and
(c) calcining the precipitate, thereby producing a complex oxide containing a cerium element, a zirconium element, an aluminum element, and optionally a rare earth metal element other than a cerium element,

wherein the aluminum compound particles are selected from alumina particles and alumina hydrate particles,
wherein the aluminum compound particles have a median diameter D₅₀ of from 1 nm to 220 nm, and
wherein the median diameter D₅₀ is measured by a dynamic light scattering method.

According to the present invention, a cerium oxide (CeO₂)-zirconium oxide (ZrO₂)-aluminum oxide (Al₂O₃)-based complex oxide having an improved heat resistance and a method of producing the complex oxide are provided.

### DETAILED DESCRIPTION OF THE INVENTION

Hereinafter, the present invention will be described. Unless otherwise specified herein, the term "rare earth metal element" means a rare earth metal element other than a cerium element, the term "rare earth metal ion" means a rare earth metal ion other than a cerium ion, the term "water-soluble rare earth metal salt" means a water-soluble rare earth metal salt other than a water-soluble cerium salt, and the term "poorly water-soluble rare earth metal salt" means a poorly water-soluble rare earth metal salt other than a poorly water-soluble cerium salt. In addition, "cerium oxide" means CeO₂, "zirconium oxide" means ZrO₂, and "aluminum oxide" means Al₂O₃.

### <<Complex Oxide>>

The complex oxide of the present invention contains a cerium element, a zirconium element, an aluminum element, and optionally a rare earth metal element other than a cerium element.

The complex oxide of the present invention is, for example, in a powder form.

The amount of a cerium element contained in the complex oxide of the present invention in terms of cerium oxide is preferably 1.0% by mass or more 50% by mass or less, more preferably 3.0% by mass or more 40% by mass or less, and still more preferably 5.0% by mass or more 30% by mass or less, based on the mass of the complex oxide of the present invention, from the viewpoint of improving the oxygen storage capacity of the complex oxide.

The amount of a zirconium element contained in the complex oxide of the present invention in terms of zirconium oxide is preferably 1.0% by mass or more 70% by mass or less, more preferably 10% by mass or more 60% by mass or less, and still more preferably 20% by mass or more 45% by mass or less, based on the mass of the complex oxide of the present invention, from the viewpoint of improving the heat resistance of the complex oxide.

The mass ratio of the amount of a zirconium element in terms of zirconium oxide to the amount of a cerium element in terms of cerium oxide is preferably from 0.10 to 20, more preferably from 0.70 to 10, and still more preferably from 1.3 to 5.0, from the viewpoint of balancing the oxygen storage capacity and the heat resistance of the complex oxide.

The amount of an aluminum element contained in the complex oxide of the present invention in terms of aluminum oxide is preferably 20% by mass or more 90% by mass or less, more preferably 30% by mass or more 80% by mass or less, still more preferably 40% by mass or more 70% by mass or less, and even still more preferably 40% by mass or more 60% by mass or less, based on the mass of the complex oxide of the present invention, from the viewpoint of improving the heat resistance of the complex oxide.

The mass ratio of the amount of an aluminum element in terms of aluminum oxide to the sum of the amount of a cerium element in terms of cerium oxide and the amount of a zirconium element in terms of zirconium oxide is preferably from 0.10 to 9.0, more preferably from 0.50 to 4.0, still more preferably from 0.60 to 2.3, and still more preferably from 0.60 to 1.9, from the viewpoint of balancing the oxygen storage capacity and the heat resistance of the complex oxide.

The complex oxide of the present invention may contain one kind, two kinds, or three or more kinds of rare earth metal elements other than a cerium element.

Rare earth metal elements other than a cerium element can be selected from yttrium, praseodymium, scandium, lanthanum, neodymium, samarium, europium, gadolinium, terbium, dysprosium, holmium, erbium, thulium, ytterbium, and lutetium elements, and the like. For example, the complex oxide of the present invention can contain one kind, two kinds, or three or more kinds of rare earth metal elements selected from lanthanum, neodymium, praseodymium, and yttrium elements.

The amount of a rare earth metal element(s) other than a cerium element contained in the complex oxide of the present invention in terms of oxide (when the complex oxide of the present invention contains two or more kinds of rare earth metal elements other than a cerium element, it is the sum of the amounts of the two or more kinds of rare earth metal elements in terms of oxide) is preferably from 0.1% by mass to 30.0% by mass, more preferably from 1.0% by mass to 25.0% by mass, and still more preferably from 5.0% by mass to 20.0% by mass, based on the mass of the complex oxide of the present invention, from the viewpoint of improving the capacity to absorb oxygen and the heat resistance. Oxide of a rare earth metal element other than a cerium element, excluding a praseodymium and a terbium element, is sesqui oxide (Ln₂O₃, wherein Ln represents a rare earth metal element). Praseodymium oxide is usually PreOn, and terbium oxide is usually Tb₄O₇.

In the complex oxide of the present invention, cerium and zirconium elements may form, together with an oxygen element, a solid solution phase (e.g., a solid solution phase composed of cerium oxide and zirconium oxide). Each of cerium and zirconium elements may form, together with an oxygen element, a single phase that is a crystal phase or amorphous phase (cerium oxide single phase or zirconium oxide single phase), in addition to the solid solution phase.

In the complex oxide of the present invention, an aluminum element may form, together with a cerium element and/or a zirconium element and an oxygen element, a solid solution phase (e.g., a solid solution phase composed of cerium oxide, zirconium oxide, and aluminum oxide, a solid solution phase composed of cerium oxide and aluminum oxide, or a solid solution phase composed of zirconium oxide and aluminum oxide), or may form, together with an oxygen element, a single phase that is a crystal phase or amorphous phase (aluminum oxide single phase).

In the complex oxide of the present invention, a rare earth metal element other than a cerium element may form, together with a cerium element and/or a zirconium element and an oxygen element, a solid solution phase (e.g., a solid solution phase composed of cerium oxide, zirconium oxide, and oxide of a rare earth metal element other than a cerium element, a solid solution phase composed of cerium oxide and oxide of a rare earth metal element other than a cerium element, or a solid solution phase composed of zirconium oxide and oxide of a rare earth metal element other than a cerium element), or may form, together with an oxygen element, a single phase that is a crystal phase or amorphous phase (oxide of a rare earth metal element other than a cerium element).

The amount of each metal element contained in the complex oxide of the present invention in terms of oxide can be calculated from, for example, the amount of each metal element in a fused product obtained by dissolving the complex oxide of the present invention by alkali fusion, which is measured by a conventional method such as inductively coupled plasma atomic emission spectroscopy (ICP-AES).

The specific surface area of the complex oxide of the present invention which is measured by the BET method after heat treatment in an air atmosphere at 1000°C for 25 hours is preferably 60.0m²/g or more. A complex oxide wherein a specific surface area that is measured by the BET method after heat treatment in an air atmosphere at 1000°C for 25 hours is 60.0 m²/g or more is excellent in heat resistance and thus can maintain the specific surface area even when exposed to high-temperature exhaust gas.

In a preferred embodiment, the amount of an aluminum element contained in the complex oxide of the present invention in terms of aluminum oxide is 60% by mass or less, based on the mass of the complex oxide of the present invention, and the specific surface area of the complex oxide of the present invention which is measured by the BET method after heat treatment in an air atmosphere at 1000°C for 25 hours is 60.0 m²/g or more. The complex oxide according to this embodiment is excellent in heat resistance, although the amount of an aluminum element contained in the complex oxide in terms of aluminum oxide is 60% by mass or less, based on the mass of the complex oxide, and thus can maintain the specific surface area even when exposed to high-temperature exhaust gas. The amount of an aluminum element contained in the complex oxide according to this embodiment in terms of aluminum oxide is preferably 20% by mass or more, more preferably 30% by mass or more, and still more preferably 40% by mass or more, based on the mass of the complex oxide, from the viewpoint of improving the heat resistance of the complex oxide.

The specific surface area of the complex oxide of the present invention which is measured by the BET method after heat treatment in an air atmosphere at 1000°C for 25 hours is more preferably 60.5 m²/g or more, still more preferably 61.0 m²/g or more, still more preferably 61.5 m²/g or more, and even still more preferably 62.0 m²/g or more. The upper limit of the specific surface area of the complex oxide of the present invention which is measured by the BET method after heat treatment in an air atmosphere at 1000°C for 25 hours is not particularly limited, and it is, for example, 100 m²/g, 90.0 m²/g, or 80.0 m²/g.

The specific surface area is measured in accordance with "(3.5) Multi-point procedures" in "6.1 Determination" of JIS R1626:1996 "Measuring methods for the specific surface area of fine ceramic powders by gas adsorption using the BET method." Nitrogen, which is an adsorption gas, is used as the gas, and five-point measurements are performed within the equilibrium relative pressure range of from 0.05 to 0.35. As a measuring device, "BELSORP-miniX" manufactured by Microtrack Bell Co., Ltd. is used.

It is preferable that the complex oxide of the present invention satisfies one or two or more of the following:
(A) complex oxide oxidizability (300°C) is 1400 or more;
(B) complex oxide oxidizability (400°C) is 2600 or more; and
(C) complex oxide oxidizability (500°C) is 2800 or more,

wherein the complex oxide oxidizability (300°C), the complex oxide oxidizability (400°C), and the complex oxide oxidizability (500°C) are defined as complex oxide oxidizabilities that are determined by using samples at 300°C, 400°C, and 500°C, respectively, and
wherein the samples are each prepared by allowing the complex oxide to support 1 part by mass of a rhodium element in terms of metal on 100 parts by mass of the complex oxide, followed by heat treatment in an air atmosphere at 1000°C for 25 hours.

A complex oxide satisfying one or two or more of (A) to (C) is excellent in heat resistance and thus can show excellent oxygen storage capacity even after exposed to high-temperature exhaust gas.

In a preferred embodiment, the amount of an aluminum element contained in the complex oxide of the present invention in terms of aluminum oxide is 60% by mass or less, based on the mass of the complex oxide of the present invention, and the complex oxide of the present invention satisfies one or two or more of (A) to (C). The complex oxide according to this embodiment is excellent in heat resistance, although the amount of an aluminum element contained in the complex oxide in terms of aluminum oxide is 60% by mass or less, based on the mass of the complex oxide, and thus can show excellent oxygen storage capacity even after exposed to high-temperature exhaust gas. The amount of an aluminum element contained in the complex oxide according to this embodiment in terms of aluminum oxide is preferably 20% by mass or more, more preferably 30% by mass or more, and still more preferably 40% by mass or more, based on the mass of the complex oxide, from the viewpoint of improving the heat resistance of the complex oxide.

In a further preferred embodiment, the amount of an aluminum element contained in the complex oxide of the present invention in terms of aluminum oxide is 60% by mass or less, based on the mass of the complex oxide of the present invention, and the specific surface area of the complex oxide of the present invention which is measured by the BET method after heat treatment in an air atmosphere at 1000°C for 25 hours is 60.0 m²/g or more, and the complex oxide of the present invention satisfies one or two or more of (A) to (C). The complex oxide according to this embodiment is excellent in heat resistance, although the amount of an aluminum element contained in the complex oxide in terms of aluminum oxide is 60% by mass or less, based on the mass of the complex oxide, and thus can maintain the specific surface area even after exposed to high-temperature exhaust gas and also show excellent oxygen storage capacity even after exposed to high-temperature exhaust gas. The amount of an aluminum element contained in the complex oxide according to this embodiment in terms of aluminum oxide is preferably 20% by mass or more, more preferably 30% by mass or more, and still more preferably 40% by mass or more, based on the mass of the complex oxide, from the viewpoint of improving the heat resistance of the complex oxide.

The complex oxide oxidizability (300°C) is preferably 1400 or more, more preferably 1600 or more, and still more preferably 1800 or more. The upper limit of the complex oxide oxidizability (300°C) is not particularly limited, and it is, for example, 3100.

The complex oxide oxidizability (400°C) is preferably 2600 or more, more preferably 2700 or more, and still more preferably 2800 or more. The upper limit of the complex oxide oxidizability (400°C) is not particularly limited, and it is, for example, 3100.

The complex oxide oxidizability (500°C) is preferably 2800 or more, more preferably 2850 or more, and still more preferably 2900 or more. The upper limit of the complex oxide oxidizability (500°C) is not particularly limited, and it is, for example, 3100.

A sample used for determination of each complex oxide oxidizability is prepared by allowing the complex oxide of the present invention to support 1 part by mass of a rhodium element in terms of metal on 100 parts by mass of the complex oxide, followed by heat treatment in an air atmosphere at 1000°C for 25 hours. Specifically, it is described as follows. The complex oxide of the present invention is dispersed in an aqueous solution of a water-soluble rhodium salt (e.g., rhodium nitrate), stirred until the solvent was evaporated, and then calcined in an air atmosphere at 600°C for 1 hour, thereby preparing a powder in which 1 part by mass of a rhodium element in terms of metal is supported on 100 parts by mass of the complex oxide. The prepared powder is heat-treated in an air atmosphere at 1000°C for 25 hours, and this is used as a sample.

The complex oxide oxidizability (300°C) is determined using a sample at 300°C. Specifically, it is described as follows. The sample is packed in a sample tube, heated to 800°C under an argon stream, and then cooled to 300°C. The thus obtained sample at 300°C is used to perform the operation (A) described in the Examples so as to determine the complex oxide oxidizability (300°C).

The complex oxide oxidizability (400°C) is determined using a sample at 400°C. Specifically, it is described as follows. The sample after the determination of the complex oxide oxidizability (300°C) is heated to 400°C under an argon stream. The thus obtained sample at 400°C is used to perform the operation (A) described in the Examples so as to determine the complex oxide oxidizability (400°C).

The complex oxide oxidizability (500°C) is determined using a sample at 500°C. Specifically, it is described as follows. The sample after the determination of the complex oxide oxidizability (400°C) was heated to 500°C under an argon stream. The thus obtained sample at 500°C is used to perform the operation (A) described in the Examples so as to determine the complex oxide oxidizability (500°C).

The complex oxide of the present invention can be used as a component of an exhaust gas purification catalyst.

In one embodiment, an exhaust gas purification catalyst contains the complex oxide of the present invention and one kind or two or more kinds of noble metal elements supported on the complex oxide. The amounts of the complex oxide of the present invention and the noble metal element(s) contained in the exhaust gas purification catalyst can be adjusted as appropriate.

The noble metal element(s) can be selected from, for example, palladium, platinum, and rhodium elements, and the like. The noble metal element(s) is/are supported on the complex oxide of the present invention in a form capable of functioning as a catalytically-active component, for example, in the form of a noble metal, an alloy containing the noble metal element, a compound containing the noble metal element (such as oxide of the noble metal element), or the like. It is preferable that the catalytically-active component is in a particle form from the viewpoint of improving exhaust gas purification performance.

The exhaust gas purification catalyst may contain a carrier component for supporting the noble metal element(s). The carrier component is preferably a porous body. The carrier component can be selected from alumina, silica, silica-alumina, alumino-silicates, alumina-zirconia, alumina-chromia, alumina-ceria, and the like.

The exhaust gas purification catalyst may contain other components such as a stabilizer and a binder.

The term "supported" refers to a state in which a noble metal element is physically or chemically adsorbed or retained on the outer surface or on the inner surface of the pores of the complex oxide of the present invention. The fact that a noble metal element is supported by the complex oxide of the present invention can be confirmed, for example, based on the fact that the complex oxide of the present invention and the noble metal element are present in the same region in an element mapping obtained by analyzing a cross-section of the exhaust gas purification catalyst by EDS (energy dispersive spectrometer).

In one embodiment, the exhaust gas purification catalyst is a molded body having a shape such as a pellet. The exhaust gas purification catalyst according to this embodiment can be produced by, for example, drying and calcining an exhaust gas purification catalyst composition. The drying temperature, drying time, calcination temperature, and calcination time can be adjusted as appropriate. The calcination can be carried out, for example, in an air atmosphere.

In another embodiment, the exhaust gas purification catalyst contains a substrate and a catalyst layer formed on the substrate, wherein the catalyst layer contains the complex oxide of the present invention and one kind or two or more kinds of noble metal elements supported on the complex oxide of the present invention.

The substrate can be selected as appropriate from substrates used in known exhaust gas purification catalysts. The material of the substrate can be selected from ceramics such as alumina (Al₂O₃), mullite (3Al₂O₃-2SiO₂), cordierite (2MgO-2Al₂O₃-5SiO₂), aluminum titanate (Al₂TiO₅), and silicon carbide (SiC), and metallic materials such as stainless steel. The form of the substrate can be selected from, for example, the form of a honeycomb, pellets, or spheres. In the case of using a substrate in the form of a honeycomb, for example, it is possible to use a monolithic substrate having a number of parallel, fine gas flow paths, namely, channels, in the interior of the substrate, such that a fluid passes through the interior of the substrate.

The catalyst layer can be formed by coating the exhaust gas purification catalyst composition on the surface of the substrate, followed by drying and calcination. In the case of using a monolithic substrate, for example, it is possible to form a catalyst layer on the surface of the inner wall of each channel in the monolithic substrate, by coating the exhaust gas purification catalyst composition on the surface of the inner wall of each channel in the monolithic substrate, followed by drying and calcination. The catalyst layer can also be formed by a method in which the exhaust gas purification catalyst composition is coated on the surface of the substrate, followed by drying and calcination, to obtain a layer, and the resulting layer is impregnated with a noble-metal-salt-containing solution, followed by drying and calcination. The drying temperature, drying time, calcination temperature, and calcination time can be adjusted as appropriate. The calcination can be carried out, for example, in an air atmosphere.

The exhaust gas purification catalyst composition used for producing the exhaust gas purification catalyst is, for example, a slurry containing the complex oxide of the present invention and a salt of a noble metal element. A salt of a noble metal element can be selected from, for example, a nitrate, an ammine complex salt, a chloride, or the like. The solvent contained in the dispersion liquid can be selected from water, organic solvents, and the like.

### <<Method of Producing Complex Oxide>>

The complex oxide of the present invention can be produced by a method including steps (a) to (c). Hereinafter, steps (a) to (c) will be described.

### Step (a)

Step (a) is a step of preparing for a raw material solution containing water, a cerium salt, a zirconium salt, aluminum compound particles, and optionally a rare earth metal salt other than a cerium salt.

Water contained in the raw material solution is preferably pure water such as ion-exchanged water. The raw material solution may contain one or two or more solvents other than water. The solvents other than water can be selected from, for example, organic solvents such as alcohols, acetone, dimethyl sulfoxide, and dimethylformamide. The sum of one kind or two or more kinds of solvents other than water is not particularly limited as long as a water-soluble salt can be dissolved in the raw material solution, but it is usually 50.0 vol% or less and preferably 20.0 vol% or less, based on the volume (vol%) of the raw material solution.

Each of a cerium salt and a zirconium salt contained in the raw material solution may be either a water-soluble salt or a poorly water-soluble salt. However, it is preferable that at least one of a cerium salt and zirconium salt is a water-soluble salt, and it is more preferable that both a cerium salt and a zirconium salt are water-soluble salts. The rare earth metal salt other than a cerium salt optionally contained in the raw material solution may be a water-soluble salt or a poorly water-soluble salt, but is preferably a water-soluble salt.

The solubility of a water-soluble salt in water at 20°C (mass of a water-soluble salt that can be dissolved in 100 g of water at 20°C) is preferably 1.0 g or more, more preferably 2.0 g or more, and still more preferably 5.0 g or more. The solubility of a poorly water-soluble salt in water at 20°C (mass of a poorly water-soluble salt that can be dissolved in 100 g of water at 20°C) is preferably less than 1.0 g, more preferably 0.5 g or less, and still more preferably 0.1 g or less.

The water-soluble cerium salt can be selected from, for example, cerium chloride, cerium nitrate, cerium sulphate (III), cerium acetate, and the like. However, cerium chloride is preferable from the viewpoint of preventing deterioration of heat resistance of the complex oxide due to contamination with nitric radical or the like and the viewpoint that it is easily available. The raw material solution may contain two or more water-soluble cerium salts. The amount of the water-soluble cerium salt contained in the raw material solution is adjusted as appropriate such that the amount of a cerium element contained in the complex oxide prepared in step (c) in terms of cerium oxide is within the desired range.

The poorly water-soluble cerium salt can be selected from, for example, cerium hydroxide, cerium oxide, cerium carbonate, cerium sulphate (IV), and the like. However, when the raw material solution is acidic (for example, when hydrolysis of a water-soluble rare earth metal salt produces acid and makes the raw material solution acidic), cerium hydroxide or cerium carbonate is preferable, and cerium hydroxide is more preferable, from the viewpoint that it can be dissolved in the raw material solution. The raw material solution may contain two or more poorly water-soluble cerium salts. The amount of the poorly water-soluble cerium salt contained in the raw material solution is adjusted as appropriate such that the amount of a cerium element contained in the complex oxide prepared in step (c) in terms of cerium oxide is within the desired range.

The water-soluble zirconium salt can be selected from, for example, zirconium oxychloride, zirconium chloride, zirconium oxynitrate, zirconium nitrate, zirconium oxyacetate, and the like. However, zirconium oxychloride or zirconium chloride is preferable, and zirconium oxychloride is more preferable, from the viewpoint of preventing deterioration of heat resistance of the complex oxide due to contamination with nitric radical or the like and the viewpoint that it is easily available. The raw material solution may contain two or more water-soluble zirconium salts. The amount of the water-soluble zirconium salt contained in the raw material solution is adjusted as appropriate such that the amount of a zirconium element contained in the complex oxide prepared in step (c) in terms of zirconium oxide is within the desired range.

The poorly water-soluble zirconium salt can be selected from, for example, zirconium hydroxide, basic zirconium sulfate, zirconium oxide, basic zirconium carbonate, and the like. However, when the raw material solution is acidic (for example, when hydrolysis of a water-soluble rare earth metal salt produces acid and makes the raw material solution acidic), zirconium hydroxide or basic zirconium carbonate is preferable from the viewpoint that it can be dissolved in the raw material solution, and zirconium hydroxide is more preferable from the viewpoint that it is excellently mixable with aluminum compound particles. The raw material solution may contain two or more poorly water-soluble zirconium salts. The amount of the poorly water-soluble zirconium salt contained in the raw material solution is adjusted as appropriate such that the amount of a zirconium element contained in the complex oxide prepared in step (c) in terms of zirconium oxide is within the desired range.

The water-soluble rare earth metal salt can be selected from, for example, a chloride, a nitrate, a sulfate, an acetate, and the like of a rare earth metal element. However, a chloride of a rare earth metal element (e.g., lanthanum chloride, neodymium chloride element, yttrium chloride, or the like) is preferable from the viewpoint of preventing deterioration of heat resistance of the complex oxide due to contamination with silver nitrate or the like and the viewpoint that it is easily available. A sulfate of a rare earth metal element is preferably a sulfate of a trivalent rare earth metal element. The raw material solution may contain two kinds or three or more kinds of water-soluble rare earth metal salts. The type and amount of the water-soluble rare earth metal salt contained in the raw material solution are adjusted as appropriate such that the amount of a rare earth metal element contained in the complex oxide prepared in step (c) in terms of oxide is within the desired range.

The poorly water-soluble rare earth metal salt can be selected from, for example, a hydroxide, an oxide, a carbonate, and the like of a rare earth metal element. However, when the raw material solution is acidic (for example, when hydrolysis of a water-soluble rare earth metal salt produces acid and makes the raw material solution acidic), a hydroxide or carbonate of a rare earth metal element (e.g., lanthanum hydroxide, neodymium hydroxide, yttrium hydroxide, lanthanum carbonate, neodymium carbonate, yttrium carbonate, or the like) is preferable, and a hydroxide of a rare earth metal element is more preferable, from the viewpoint that is can be dissolved in the raw material solution. The raw material solution may contain two kinds or three or more kinds of poorly water-soluble rare earth metal salts. The type and amount of the poorly water-soluble rare earth metal salt contained in the raw material solution are adjusted as appropriate such that the amount of a rare earth metal element contained in the complex oxide prepared in step (c) in terms of oxide is within the desired range.

Aluminum compound particles can be selected from alumina particles and alumina hydrate particles. Aluminum compound particles may be constituted by either alumina particles or alumina hydrate particles or both thereof. However, they are preferably constituted by alumina hydrate particles from the viewpoint of improving the heat resistance of the complex oxide produced in step (c). Alumina hydrate particles have a weak sinterability and are easily dispersed finely in the complex oxide, which is advantageous in improving the heat resistance of the complex oxide.

Alumina hydrate that constitutes alumina hydrate particles is preferably alumina monohydrate or alumina trihydrate, and more preferably alumina monohydrate, from the viewpoint of improving the heat resistance of the complex oxide produced in step (c).

Alumina monohydrate is typically represented by a composition formula such as AlO(OH) or α-Al₂O₃·H₂O. Alumina monohydrate can be selected from, for example, boehmite, diaspore, and the like. However, it is preferably boehmite from the viewpoint of improving the heat resistance of the complex oxide produced in step (c). Boehmite may be so-called pseudo-boehmite containing one or more molecules of water between layers.

Alumina trihydrate is typically represented by a composition formula such as Al(OH)₃ or Al₂O₃·3H₂O. Alumina trihydrate can be selected from, for example, gibbsite (also referred to as hydrargillite), bayerite, and the like.

The median diameter D₅₀ of aluminum compound particles measured by a dynamic light scattering method is preferably from 1 nm to 220 nm, more preferably from 5 nm to 200 nm, still more preferably from 10 nm to 160 nm, and still more preferably from 15 nm to 100 nm. When the median diameter D₅₀ of aluminum compound particles is within this range, dispersibility of aluminum compound particles in the precipitate formed in step (b) and the complex oxide produced in step (c) can be improved, thereby making it possible to improve the heat resistance of the complex oxide.

The "median diameter D₅₀ of aluminum compound particles measured by the dynamic light scattering method" means a particle size at which the cumulative volume is 50% in a volume-based particle size distribution of aluminum compound particles measured by the dynamic light scattering method. Measurement of the volume-based particle size distribution of aluminum compound particles by the dynamic light scattering method can be carried out by dispersing aluminum compound particles in pure water such as ion-exchanged water and using a commercially available particle size distribution analyzer (e.g., "Zetasizer Nano ZS" manufactured by Malvern Panalytical).

From the viewpoint of obtaining a desired precipitate in step (b), it is preferable to allow aluminum compound particles to be dispersed in the raw material solution prepared in step (a) by stirring before being subjected to step (b).

### Step (b)

Step (b) is a step of adding a precipitant to the raw material solution prepared in step (a), thereby forming a precipitate containing a cerium element, a zirconium element, an aluminum element, and optionally a rare earth metal element other than a cerium element.

The raw material solution prepared in step (a) contains a metal ion generated by ionization of a water-soluble salt. A precipitant to be added to the raw material solution is to precipitate a metal ion generated by ionization of a water-soluble salt as a poorly water-soluble salt, and it can be selected as appropriate depending on the type of a water-soluble salt contained in the raw material solution and the type of a poorly water-soluble salt to be precipitated.

When the raw material solution contains a water-soluble cerium salt, a precipitant for precipitating a cerium ion as a poorly water-soluble cerium salt can be used. The poorly water-soluble cerium salt to be precipitated can be selected from, for example, cerium hydroxide, cerium carbonate, and the like, but it is preferably cerium hydroxide. When the poorly water-soluble cerium salt to be precipitated is cerium carbonate, a carbonate ion used for formation of cerium carbonate may inhibit precipitate formation of a zirconium ion. For example, a carbonate ion may form a water-soluble zirconium complex (e.g., [Zr(CO₃)₄]⁴⁻, [ZrOH(CO₃)₃]³⁻, or the like) or the like.

When the raw material solution contains a water-soluble zirconium salt, a precipitant for precipitating a zirconium ion as a poorly water-soluble zirconium salt can be used. The poorly water-soluble zirconium salt to be precipitated can be selected from, for example, zirconium hydroxide, basic zirconium sulfate, and the like, but it is preferably zirconium hydroxide or basic zirconium sulfate, and more preferably zirconium hydroxide.

When the raw material solution contains a water-soluble rare earth metal salt, a precipitant for precipitating a rare earth metal ion as a poorly water-soluble rare earth metal salt can be used. The poorly water-soluble rare earth metal salt to be precipitated can be selected from, for example, a hydroxide, a carbonate, and the like of a rare earth metal element, but it is preferably a hydroxide of a rare earth metal element (for example, lanthanum hydroxide, neodymium hydroxide, yttrium hydroxide, or the like). When the poorly water-soluble rare earth metal salt to be precipitated is a carbonate of a rare earth metal element, a carbonate ion used for formation of a carbonate may inhibit precipitate formation of a zirconium ion.

One kind of precipitant may cause two kinds or three or more kinds of metal ions to be precipitated as poorly water-soluble metal salts. Therefore, a precipitant for precipitating a cerium ion as a poorly water-soluble cerium salt, a precipitant for precipitating a zirconium ion as a poorly water-soluble zirconium salt, and a precipitant for precipitating a rare earth metal ion as a poorly water-soluble rare earth metal salt may be of the same kind or different kinds.

As the precipitant, for example, a precipitant selected from: an aqueous solution containing a sulfate ion; and a compound that can dissolve in water to produce a sulfate ion can be used. This precipitant allows a zirconium ion to be precipitated as basic zirconium sulfate. The compound that can dissolve in water to produce a sulfate ion can be selected from, for example, ammonium sulfate, sulfuric acid, alkaline metal sulfate, cerium sulfate (III), rare earth metal sulfate, and the like. However, it is preferably ammonium sulfate, sulfuric acid, or alkaline metal sulfate from the viewpoint of improving the homogeneity of a solid solution phase formed with a cerium element, a zirconium element, and an oxygen element (for example, a solid solution phase composed of cerium oxide and zirconium oxide) and the viewpoint that it is easily available. The rare earth metal sulfate is preferably a trivalent rare earth metal sulfate.

As the precipitant, for example, a precipitant selected from: an aqueous solution containing a hydroxide ion; and a compound that can dissolve in water to produce a hydroxide ion can be used. This precipitant allows a cerium ion, a zirconium ion, and a rare earth metal ion to be precipitated as cerium hydroxide, zirconium hydroxide, and a hydroxide of a rare earth metal element, respectively. The compound that can dissolve in water to produce a hydroxide ion can be selected from, for example, sodium hydroxide, potassium hydroxide, rubidium hydroxide, cesium hydroxide, lithium hydroxide, ammonia, amines, quaternary ammonium hydroxide, guanidine, alkaline metal carbonate, alkaline metal bicarbonate, urea, and the like, but it is preferably sodium hydroxide. Sodium hydroxide is highly basic and easily available.

The pH of the raw material solution when forming a precipitate (the pH of the raw material solution after the addition of a precipitant) can be adjusted as appropriate. For example, the pH can be set to from 9 to 14 from the viewpoint of inhibiting elution of components in the precipitate containing a cerium element, a zirconium element, an aluminum element, and optionally a rare earth metal element other than a cerium element.

By adding a precipitant to the raw material solution prepared in step (a), a precipitate containing a cerium element, a zirconium element, an aluminum element, and optionally a rare earth metal element other than a cerium element is formed.

A cerium element is contained in the form of a poorly water-soluble cerium salt in the precipitate. The poorly water-soluble cerium salt contained in the precipitate may be a poorly water-soluble cerium salt initially contained in the raw material solution or a poorly water-soluble cerium salt formed by the precipitant. However, it is preferably a poorly water-soluble cerium salt formed by the precipitant from the viewpoint of improving dispersibility of aluminum compound particles in the precipitate formed in step (b) and the complex oxide produced in step (c), thereby improving the heat resistance of the complex oxide.

A zirconium element is contained in the form of a poorly water-soluble zirconium salt in the precipitate. The poorly water-soluble zirconium salt contained in the precipitate may be a poorly water-soluble zirconium salt initially contained in the raw material solution or a poorly water-soluble zirconium salt formed by the precipitant. However, it is preferably a poorly water-soluble zirconium salt formed by the precipitant from the viewpoint of improving dispersibility of aluminum compound particles in the precipitate formed in step (b) and the complex oxide produced in step (c), thereby improving the heat resistance of the complex oxide.

A rare earth metal element is contained in the form of a poorly water-soluble rare earth metal salt in the precipitate. The poorly water-soluble rare earth metal salt contained in the precipitate may be a poorly water-soluble rare earth metal salt initially contained in the raw material solution or a poorly water-soluble rare earth metal salt formed by the precipitant. However, it is preferably a poorly water-soluble rare earth metal salt formed by the precipitant from the viewpoint of improving dispersibility of aluminum compound particles in the precipitate formed in step (b) and the complex oxide produced in step (c), thereby improving the heat resistance of the complex oxide.

The precipitate obtained in step (b) contains poorly water-soluble salt particles and aluminum compound particles in a mixed state. Examples of poorly water-soluble salt particles include: complex salt particles containing a poorly water-soluble cerium salt, a poorly water-soluble zirconium salt, and optionally a poorly water-soluble rare earth metal salt other than a poorly water-soluble cerium salt; poorly water-soluble cerium salt particles; poorly water-soluble zirconium salt particles; and poorly water-soluble rare earth metal salt particles other than poorly water-soluble cerium salt particles. From the viewpoint of improving the oxygen storage capacity of the complex oxide, it is preferable that the precipitate contains complex salt particles. The precipitate may contain poorly water-soluble cerium salt particles, poorly water-soluble zirconium salt particles, poorly water-soluble rare earth metal salt particles other than poorly water-soluble cerium salt particles, and the like in addition to complex salt particles.

The precipitate obtained in step (b) may be preferably in the form of slurry or cake and more preferably in the form of cake, before being subjected to step (c). Slurry or cake can be obtained by treating the raw material solution subjected to step (b) by a solid-liquid separation method. The solid-liquid separation method can be selected from, for example, filtration, centrifugation, decantation, and the like. However, filtration is preferable because the operation is easy and excellent in solid-liquid separation efficiency. The solvent cannot be removed completely, and thus, the slurry or cake contains the remaining solvent.

It is preferable that the precipitate obtained in step (b) is washed with a washing liquid before being subjected to step (c). Water (e.g., pure water such as ion-exchanged water) can be used as the washing liquid. In addition to the above, from the viewpoint of inhibiting elution of components in the precipitate and the viewpoint of washing and removing sulfur in the precipitate, a solution containing a sodium salt (sodium hydroxide, sodium carbonate, sodium bicarbonate, or the like), ammonia water, a solution containing an acid (nitric acid, acetic acid, or the like) can be used as a washing liquid, and the pH of the washing liquid can be adjusted to, for example, from 6 to 14.

### Step (c)

Step (c) is a step of calcining the precipitate obtained in step (b), thereby producing a complex oxide containing a cerium element, a zirconium element, an aluminum element, and optionally a rare earth metal element other than a cerium element.

The precipitate obtained in step (b) contains poorly water-soluble salt particles (e.g., complex salt particles containing a poorly water-soluble cerium salt, a poorly water-soluble zirconium salt, and optionally a poorly water-soluble rare earth metal salt other than a poorly water-soluble cerium salt) and aluminum compound particles in a mixed state. Therefore, aluminum compound particles are present between poorly water-soluble salt particles. When the precipitate obtained in step (b) is calcined, aluminum compound particles present between poorly water-soluble salt particles inhibit sintering between poorly water-soluble salt particles. Accordingly, the heat resistance of the complex oxide obtained in step (c) is improved such that the specific surface area of the complex oxide which is measured by the BET method after heat treatment in an air atmosphere at 1000°C for 25 hours can reach 60.0 m²/g or more.

Calcination of the precipitate can be carried out in accordance with a conventional method. Calcination is usually performed in an air atmosphere. The calcination temperature is usually from 400°C to 1200°C, preferably from 500°C to 1100°C, and more preferably from 600°C to 1000°C. The calcination time is usually from 0.1 to 20 hours, preferably from 0.5 to 10 hours, and more preferably from 1 to 5 hours.

The resulting complex oxide may be pulverized as necessary. The pulverization can be carried out in accordance with a conventional method. The pulverization can be carried out by a dry process or a wet process, using, for example, a mortar, a hammer mill, a ball mill, a bead mill, a jet mill, a roller mill, or the like.

Hereinafter, embodiments of a method of producing a complex oxide will be described.

### (First Embodiment]

In the first embodiment, a raw material solution, in which all of a cerium salt, a zirconium salt, and a rare earth metal salt other than a cerium salt are water-soluble salts, is prepared in step (a). The first embodiment encompasses an embodiment in which the raw material solution prepared in step (a) does not contain a rare earth metal salt other than a cerium salt. In such an embodiment in which the raw material solution prepared in step (a) does not contain a rare earth metal salt other than a cerium salt, the expression "all of a cerium salt, a zirconium salt, and a rare earth metal salt other than a cerium salt are water-soluble salts" means that both a cerium salt and a zirconium salt are water-soluble salts.

In the first embodiment, as a precipitant to be added to the raw material solution, a precipitant for precipitating a cerium ion as a poorly water-soluble cerium salt and a precipitant for precipitating a zirconium ion as a poorly water-soluble zirconium salt are used in step (b). In the embodiment in which the raw material solution contains a rare earth metal salt, a precipitant for precipitating a rare earth metal ion as a poorly water-soluble rare earth metal salt is also used. These precipitants may be of the same kind or different kinds.

In the first embodiment, it is preferable that in step (b), a first precipitant selected from: an aqueous solution containing a sulfate ion; and a compound that can dissolve in water to produce a sulfate ion is added to a raw material solution, thereby forming a first precipitate containing a zirconium element and an aluminum element, and then a second precipitant selected from: an aqueous solution containing a hydroxide ion; and a compound that can dissolve in water to produce a hydroxide ion is added to the raw material solution, thereby forming a second precipitate containing a cerium element, a zirconium element, an aluminum element, and optionally a rare earth metal element other than a cerium element.

In step (b), by adding a first precipitant to the raw material solution, a first precipitate containing a zirconium element and an aluminum element is formed.

A zirconium element is contained in the form of a basic zirconium sulfate in the first precipitate. The basic zirconium sulfate is a poorly water-soluble zirconium salt formed by a first precipitant.

An aluminum element is contained in the form of aluminum compound particles in the first precipitate. The aluminum compound particles are derived from aluminum compound particles initially contained in the raw material solution. The aluminum compound particles in the raw material solution are coprecipitated with a poorly water-soluble zirconium salt formed by the first precipitant.

The first precipitate contains the basic zirconium sulfate particles and the aluminum compound particles in a mixed state.

From the viewpoint of allowing the basic zirconium sulfate to be sufficiently precipitated so as to improve the heat resistance of the complex oxide produced in step (c), the temperature of the raw material solution when adding the first precipitant is preferably from 40°C to 150°C, more preferably from 55°C to 130°C, and still more preferably from 70°C to 100°C.

From the viewpoint of allowing the basic zirconium sulfate to be sufficiently precipitated and suppressing the adverse effects due to an excessive amount of a sulfate ion so as to improve the heat resistance of the complex oxide produced in step (c), it is preferable to add the first precipitant to the raw material solution such that the molar quantity of a sulfate ion in the raw material solution is from 0.10 times to 10 times the molar quantity of a zirconium element in the raw material solution. The molar quantity of a sulfate ion in the raw material solution is preferably from 0.20 times to 5.0 times and more preferably from 0.30 times to 2.0 times the molar quantity of a zirconium element in the raw material solution.

From the viewpoint of allowing the basic zirconium sulfate to be sufficiently precipitated so as to improve the heat resistance of the complex oxide produced in step (c), it is preferable that after the addition of the first precipitant, the first precipitate is matured while stirring the raw material solution. The maturation time is preferably from 0.1 to 10 hours, more preferably from 0.2 to 5 hours, and still more preferably from 0.3 to 3 hours.

After the first precipitate is formed and as necessary matured, by adding a second precipitant to the raw material solution, a precipitate containing a cerium element, a zirconium element, an aluminum element, and optionally a rare earth metal element other than a cerium element is formed.

A cerium element is contained in the form of cerium hydroxide in the second precipitate. Cerium hydroxide is a poorly water-soluble cerium salt formed by the second precipitant.

A zirconium element is contained in the form of zirconium hydroxide in the second precipitate. Zirconium hydroxide is a poorly water-soluble zirconium salt formed by the second precipitant. Basic zirconium sulfate formed by the first precipitant is converted to zirconium hydroxide by the second precipitant.

A rare earth metal element is contained in the form of a hydroxide of the rare earth metal element in the second precipitate. The hydroxide of the rare earth metal element is a poorly water-soluble rare earth metal salt formed by the second precipitant. The poorly water-soluble rare earth metal salt formed by the second precipitant is coprecipitated with the poorly water-soluble cerium salt formed by the second precipitant.

An aluminum element is contained in the form of aluminum compound particles in the second precipitate. The aluminum compound particles are derived from aluminum compound particles initially contained in the raw material solution. The aluminum compound particles in the raw material solution are coprecipitated with the poorly water-soluble cerium salt formed by the second precipitant and optionally the poorly water-soluble rare earth metal salt formed by the second precipitant. At least part of the aluminum compound particles contained in the first precipitate is usually contained as is in the second precipitate.

The second precipitate contains complex salt particles containing cerium hydroxide, zirconium hydroxide, and optionally a hydroxide of a rare earth metal element other than cerium hydroxide, and aluminum compound particles in a mixed state. The second precipitate may contain cerium hydroxide particles, zirconium hydroxide particles, hydroxide particles of a rare earth metal element, and the like, in addition to the complex salt particles. The complex salt particles are formed by, for example, allowing cerium hydroxide and/or a hydroxide of a rare earth metal element other than cerium hydroxide formed by the second precipitant to adhere to and grow on the surface of basic zirconium sulfate formed by the first precipitant (the basic zirconium sulfate is converted to zirconium hydroxide by the second precipitant).

From the viewpoint of allowing the hydroxide of interest (cerium hydroxide, zirconium hydroxide, and optionally a hydroxide of a rare earth metal element) to be sufficiently precipitated, preventing aluminum compound particles from dissolving due to a hydroxide ion, and allowing the basic zirconium sulfate to be sufficiently precipitated so as to improve the heat resistance of the complex oxide produced in step (c), the temperature of the raw material solution when adding the second precipitant is preferably from 35°C to 60°C, more preferably from 35°C to 55°C, and still more preferably from 35°C to 45°C.

From the viewpoint of preventing aluminum compound particles from dissolving due to a hydroxide ion so as to improve the heat resistance of the complex oxide produced in step (c), it is preferable that the second precipitant is added to the raw material solution such that the molar quantity of a hydroxide ion in the raw material solution is from 2.0 times to 10 times the molar quantity of an oxygen element that is required to allow each of a cerium element, a zirconium element, and a rare earth metal element other than a cerium element in the raw material solution to become oxide. The molar quantity of a hydroxide ion in the raw material solution is preferably from 2.0 times to 5.0 times and more preferably from 2.0 times to 3.0 times the molar quantity of an oxygen element that is required to allow each of a cerium element, a zirconium element, and a rare earth metal element other than a cerium element in the raw material solution to become oxide.

The molar quantity (M) of an oxygen element that is required to allow each of a cerium element, a zirconium element, and a rare earth metal element other than a cerium element in the raw material solution to become oxide can be calculated by M = [(Molar quantity of cerium element) × 2] + [(Molar quantity of zirconium element) × 2] + [(Molar quantity of rare earth metal element other than cerium element, praseodymium element, and terbium element) × 3/2] + [(Molar quantity of praseodymium element) × 11/6] + [(Molar quantity of terbium element) × 7/4].

From the viewpoint of allowing the hydroxide of interest (cerium hydroxide, zirconium hydroxide, and optionally hydroxide of a rare earth metal element) to be sufficiently precipitated so as to improve the heat resistance of the complex oxide produced in step (c), it is preferable that after the addition of the second precipitant, the second precipitate is matured while stirring the raw material solution. The maturation time is preferably from 1 to 96 hours, more preferably from 1 to 48 hours, and still more preferably from 1 to 24 hours.

In the first embodiment, it is preferable to calcine the second precipitate obtained in step (b), thereby producing a complex oxide containing a cerium element, a zirconium element, an aluminum element, and optionally a rare earth metal element other than a cerium element in step (c).

### [Second Embodiment]

In the second embodiment, a raw material solution in which both a cerium salt and a rare earth metal salt other than a cerium salt are water-soluble salts and a zirconium salt is a poorly water-soluble salt is prepared in step (a). The second embodiment encompasses an embodiment in which the raw material solution prepared in step (a) does not contain a rare earth metal salt other than a cerium salt. In such an embodiment in which the raw material solution prepared in step (a) does not contain a rare earth metal salt other than a cerium salt, the expression "both a cerium salt and a rare earth metal salt are water-soluble salts, and a zirconium salt is a poorly water-soluble salt" means that the cerium salt is a water-soluble salt, and the zirconium salt is a poorly water-soluble salt.

In the second embodiment, as a precipitant to be added to the raw material solution, a precipitant for precipitating a cerium ion as a poorly water-soluble cerium salt is used in step (b). In the embodiment in which the raw material solution contains a rare earth metal salt, a precipitant for precipitating a rare earth metal ion as a poorly water-soluble rare earth metal salt is also used. These precipitants may be of the same kind or different kinds.

In the second embodiment, it is preferable that in step (b), a precipitant selected from: an aqueous solution containing a hydroxide ion; and a compound that can dissolve in water to produce a hydroxide ion is added to the raw material solution, thereby forming a precipitate containing a cerium element, a zirconium element, an aluminum element, and optionally a rare earth metal element other than a cerium element.

By adding a precipitant to the raw material solution, a precipitate containing a cerium element, a zirconium element, an aluminum element, and optionally a rare earth metal element other than a cerium element is formed.

A cerium element is contained in the form of cerium hydroxide in the precipitate. Cerium hydroxide is a poorly water-soluble cerium salt formed by the precipitant.

A zirconium element is contained in the precipitate in the form of a poorly water-soluble salt initially contained in the raw material solution or in the form of zirconium hydroxide. When the poorly water-soluble zirconium salt initially contained in the raw material solution is a basic zirconium sulfate, the basic zirconium sulfate is converted to zirconium hydroxide by the precipitant. In this case, a zirconium element is contained in the form of zirconium hydroxide in the precipitate. When the poorly water-soluble zirconium salt initially contained in the raw material solution is zirconium hydroxide, a zirconium element is contained in the form of a poorly water-soluble salt initially contained in the raw material solution (the form of zirconium hydroxide) in the precipitate.

A rare earth metal element is contained in the form of a hydroxide of a rare earth metal element in the precipitate. The hydroxide of a rare earth metal element is a poorly water-soluble rare earth metal salt formed by the precipitant. The poorly water-soluble rare earth metal salt formed by the precipitant is coprecipitated with the poorly water-soluble cerium salt formed by the precipitant.

An aluminum element is contained in the form of aluminum compound particles in the precipitate. The aluminum compound particles are derived from aluminum compound particles initially contained in the raw material solution. The aluminum compound particles in the raw material solution are coprecipitated with the poorly water-soluble cerium salt formed by the precipitant and optionally the poorly water-soluble rare earth metal salt formed by the precipitant.

The precipitate contains complex salt particles containing cerium hydroxide, a poorly water-soluble zirconium salt (when the poorly water-soluble zirconium salt initially contained in the raw material solution is a basic zirconium sulfate, the basic zirconium sulfate is converted to zirconium hydroxide by the precipitant), and optionally a hydroxide of a rare earth metal element other than cerium hydroxide and aluminum compound particles in a mixed state. The precipitate may contain cerium hydroxide particles, poorly water-soluble zirconium salt particles, zirconium hydroxide particles, hydroxide particles of a rare earth metal element, and the like, in addition to the complex salt particles. The complex salt particles are formed by, for example, allowing cerium hydroxide and/or a hydroxide of a rare earth metal element other than cerium hydroxide formed by the precipitant to adhere to and grow on the surface of a poorly water-soluble zirconium salt (when the poorly water-soluble zirconium salt initially contained in the raw material solution is a basic zirconium sulfate, the basic zirconium sulfate is converted to zirconium hydroxide by the precipitant).

In the first embodiment, the above description about the temperature of the raw material solution when adding the second precipitant also applies to the temperature of the raw material solution when adding the precipitant in the second embodiment.

In the first embodiment, the above description about the second precipitant to be added to the raw material solution (the above description about the molar quantity of a hydroxide ion in the raw material solution) also applies to the amount of the precipitant to be added to the raw material solution (molar quantity of a hydroxide ion in the raw material solution) in the second embodiment.

In the second embodiment, the expression "the molar quantity of an oxygen element that is required to allow each of a cerium element, a zirconium element, and a rare earth metal element other than a cerium element in the raw material solution to become oxide" means the molar quantity of an oxygen element that is required to allow each of a cerium element, a zirconium element, and a rare earth metal element other than a cerium element in the raw material solution to become oxide, in the case where the poorly water-soluble zirconium salt initially contained in the raw material solution is converted to zirconium hydroxide by the precipitant (for example, in the case where the poorly water-soluble zirconium salt initially contained in the raw material solution is a basic zirconium sulfate), or means the molar quantity of an oxygen element that is required to allow each of a cerium element and a rare earth metal element other than a cerium element in the raw material solution to become oxide, in the case where the poorly water-soluble zirconium salt initially contained in the raw material solution is not converted to zirconium hydroxide by the precipitant (for example, in the case where the poorly water-soluble zirconium salt initially contained in the raw material solution is zirconium hydroxide).

From the viewpoint of allowing the hydroxide of interest (cerium hydroxide, optionally zirconium hydroxide and optionally a hydroxide of a rare earth metal element) to be sufficiently precipitated so as to improve the heat resistance of the complex oxide produced in step (c), it is preferable that after the addition of the precipitant, the precipitate is matured while stirring the raw material solution. The maturation time is preferably from 1 to 96 hours, more preferably from 1 to 48.0 hours, and still more preferably from 1 to 24 hours.

In the second embodiment, the precipitate obtained in step (b) is calcined, thereby producing a complex oxide containing a cerium element, a zirconium element, an aluminum element, and optionally a rare earth metal element other than a cerium element in step (c).

### [Third Embodiment]

In the third embodiment, a raw material solution in which both a cerium salt and a rare earth metal salt other than a cerium salt are poorly water-soluble salts and a zirconium salt is a water-soluble salt is prepared in step (a). The third embodiment encompasses an embodiment in which the raw material solution prepared in step (a) does not contain a rare earth metal salt other than a cerium salt. In such an embodiment in which the raw material solution prepared in step (a) does not contain a rare earth metal salt other than a cerium salt, the expression "both a cerium salt and a rare earth metal salt are poorly water-soluble salts, and a zirconium salt is a water-soluble salt" means that the cerium salt is a poorly water-soluble salt, and the zirconium salt is a water-soluble salt.

In the third embodiment, as a precipitant to be added to the raw material solution, a precipitant for precipitating a zirconium ion as a poorly water-soluble zirconium salt is used in step (b).

In the third embodiment, it is preferable that in the step (b), a precipitant selected from: an aqueous solution containing a sulfate ion; and a compound that can dissolve in water to produce a sulfate ion is added to a raw material solution, thereby forming a first precipitate containing a cerium element, a zirconium element, an aluminum element, and optionally a rare earth metal element other than a cerium element, and then a reagent selected from: an aqueous solution containing a hydroxide ion; and a compound that can dissolve in water to produce a hydroxide ion is added to the raw material solution so as to treat the first precipitate with a hydroxide ion, thereby forming a second precipitate containing a cerium element, a zirconium element, an aluminum element, and optionally a rare earth metal element other than a cerium element.

In step (b), by adding a precipitant to the raw material solution, a first precipitate containing a cerium element, a zirconium element, an aluminum element, and optionally a rare earth metal element other than a cerium element is formed.

A cerium element is contained in the first precipitate in the form of a poorly water-soluble salt initially contained in the raw material solution.

A zirconium element is contained in the form of a basic zirconium sulfate in the first precipitate. The basic zirconium sulfate is a poorly water-soluble zirconium salt formed by a precipitant.

A rare earth metal element other than a cerium element is contained in the first precipitate in the form of a poorly water-soluble salt initially contained in the raw material solution.

An aluminum element is contained in the form of aluminum compound particles in the first precipitate. The aluminum compound particles are derived from aluminum compound particles initially contained in the raw material solution. The aluminum compound particles in the raw material solution are coprecipitated with a poorly water-soluble zirconium salt formed by the precipitant.

The first precipitate contains a poorly water-soluble cerium salt, basic zirconium sulfate, aluminum compound particles, and optionally a poorly water-soluble rare earth metal salt other than a poorly water-soluble cerium salt in a mixed state.

In the first embodiment, the above description about the temperature of the raw material solution when adding the first precipitant also applies to the temperature of the raw material solution when adding the precipitant in the third embodiment.

In the first embodiment, the above description about the first precipitant to be added to the raw material solution (the above description about the molar quantity of a sulfate ion in the raw material solution) also applies to the amount of the precipitant to be added to the raw material solution (molar quantity of a sulfate ion in the raw material solution) in the third embodiment.

From the viewpoint of allowing the basic zirconium sulfate to be sufficiently precipitated so as to improve the heat resistance of the complex oxide produced in step (c), it is preferable that after the addition of the precipitant, the first precipitate is matured while stirring the raw material solution. The maturation time is preferably from 0.1 to 10 hours, more preferably from 0.2 to 5 hours, and still more preferably from 0.3 to 3 hours.

After the first precipitate is formed and optionally matured, a reagent selected from: an aqueous solution containing a hydroxide ion; and a compound that can dissolve in water to produce a hydroxide ion is added to the raw material solution so as to treat the first precipitate with a hydroxide ion, thereby forming a second precipitate containing a cerium element, a zirconium element, an aluminum element, and optionally a rare earth metal element other than a cerium element.

A cerium element is contained in the second precipitate in the form of a poorly water-soluble salt initially contained in the raw material solution or in the form of cerium hydroxide. When the poorly water-soluble cerium salt initially contained in the raw material solution is cerium oxide, cerium carbonate, or cerium sulfate (IV), the poorly water-soluble cerium salt is converted to cerium hydroxide by a hydroxide ion. In this case, a cerium element is contained in the form of cerium hydroxide in the second precipitate. When the poorly water-soluble cerium salt initially contained in the raw material solution is cerium hydroxide, a cerium element is contained in the form of a poorly water-soluble salt initially contained in the raw material solution (the form of cerium hydroxide) in the second precipitate.

A zirconium element is contained in the form of zirconium hydroxide in the second precipitate. Zirconium hydroxide is a poorly water-soluble zirconium salt formed by a hydroxide ion. Basic zirconium sulfate formed by the precipitant is converted to zirconium hydroxide by a hydroxide ion.

A rare earth metal element is contained in the second precipitate in the form of a poorly water-soluble salt initially contained in the raw material solution or in the form of hydroxide. When the poorly water-soluble rare earth metal salt initially contained in the raw material solution is an oxide or a carbonate, the poorly water-soluble rare earth metal salt is converted to a hydroxide of a rare earth metal element by a hydroxide ion. In this case, a rare earth metal element is contained in the form of hydroxide in the second precipitate. When the poorly water-soluble rare earth metal salt initially contained in the raw material solution is a hydroxide of a rare earth metal element, a rare earth metal element is contained in the form of a poorly water-soluble salt initially contained in the raw material solution (the form of hydroxide) in the second precipitate.

An aluminum element is contained in the form of aluminum compound particles in the second precipitate. The aluminum compound particles are derived from aluminum compound particles initially contained in the raw material solution. At least part of the aluminum compound particles contained in the first precipitate is usually contained as is in the second precipitate.

The second precipitate contains complex salt particles containing a poorly water-soluble cerium salt (when the poorly water-soluble cerium salt initially contained in the raw material solution is cerium oxide, cerium carbonate, or cerium sulfate (IV), the poorly water-soluble cerium salt is converted to cerium hydroxide by a hydroxide ion), zirconium hydroxide, and optionally a poorly water-soluble rare earth metal salt other than a poorly water-soluble cerium salt (when the poorly water-soluble rare earth metal salt initially contained in the raw material solution is an oxide or a carbonate, the poorly water-soluble rare earth metal salt is converted to a hydroxide of a rare earth metal element by a hydroxide ion) and aluminum compound particles in a mixed state. The second precipitate may contain poorly water-soluble cerium salt particles, cerium hydroxide particles, zirconium hydroxide particles, poorly water-soluble rare earth metal salt particles, hydroxide particles of a rare earth metal element, and the like, in addition to the complex salt particles. The complex salt particles are formed by, for example, allowing a poorly water-soluble cerium salt (when the poorly water-soluble cerium salt initially contained in the raw material solution is cerium oxide, cerium carbonate, or cerium sulfate (IV), the poorly water-soluble cerium salt is converted to cerium hydroxide by a hydroxide ion) and/or a poorly water-soluble rare earth metal salt other than a poorly water-soluble cerium salt (when the poorly water-soluble rare earth metal salt initially contained in the raw material solution is an oxide or a carbonate, the poorly water-soluble rare earth metal salt is converted to a hydroxide of a rare earth metal element by a hydroxide ion) to adhere to and grow on the surface of basic zirconium sulfate formed by the precipitant (the basic zirconium sulfate is converted to zirconium hydroxide by a hydroxide ion).

In the first embodiment, the above description about the temperature of the raw material solution when adding the second precipitant also applies to the temperature of the raw material solution when adding the reagent in the third embodiment.

In the first embodiment, the above description about the second precipitant to be added to the raw material solution (the above description about the molar quantity of a hydroxide ion in the raw material solution) also applies to the amount of the reagent to be added to the raw material solution (molar quantity of a hydroxide ion in the raw material solution) in the third embodiment.

In the third embodiment, the expression "the molar quantity of an oxygen element that is required to allow each of a cerium element, a zirconium element, and a rare earth metal element other than a cerium element in the raw material solution to become oxide" means the molar quantity of an oxygen element that is required to allow each of a cerium element, a zirconium element, and a rare earth metal element other than a cerium element in the raw material solution to become oxide, in the case where the poorly water-soluble cerium salt and the poorly water-soluble rare earth metal salt initially contained in the raw material solution are converted to cerium hydroxide and a hydroxide of a rare earth metal element, respectively, by the reagent, or means the molar quantity of an oxygen element that is required to allow each of a cerium element and a zirconium element in the raw material solution to become oxide, in the case where the poorly water-soluble cerium salt initially contained in the raw material solution is converted to cerium hydroxide by the reagent and the poorly water-soluble rare earth metal salt contained in the raw material solution is not converted to a hydroxide of a rare earth metal element, or means the molar quantity of an oxygen element that is required to allow each of a zirconium element and a rare earth metal element other than a cerium element in the raw material solution to become oxide, in the case where the poorly water-soluble cerium salt initially contained in the raw material solution is not converted to cerium hydroxide by the reagent and the poorly water-soluble rare earth metal salt initially contained in the raw material solution is converted to a hydroxide of a rare earth metal element, or means the molar quantity of an oxygen element that is required to allow each of a zirconium element in the raw material solution to become oxide, in the case where the poorly water-soluble cerium salt and the poorly water-soluble rare earth metal salt initially contained in the raw material solution are not converted to cerium hydroxide and a hydroxide of a rare earth metal element, respectively, by the reagent.

From the viewpoint of allowing the hydroxide of interest (zirconium hydroxide, cerium hydroxide, and optionally hydroxide of a rare earth metal element) to be sufficiently precipitated so as to improve the heat resistance of the complex oxide produced in step (c), it is preferable that after the addition of the reagent, the second precipitate is matured while stirring the raw material solution. The maturation time is preferably from 1 to 96 hours, more preferably from 1 to 48 hours, and still more preferably from 1 to 24 hours.

In the third embodiment, the second precipitate obtained in step (b) is calcined, thereby producing a complex oxide containing a cerium element, a zirconium element, an aluminum element, and optionally a rare earth metal element other than a cerium element in step (c).

### EXAMPLES

### [Examples 1 to 5]

### (1) Production of Complex Oxide Powder

Cerium chloride (3.3 g in terms of cerium oxide), zirconium oxychloride (14.7 g in terms of zirconium oxide), lanthanum chloride (0.8 g in terms of lanthanum oxide), neodymium chloride (0.8 g in terms of neodymium oxide), and yttrium chloride (0.8 g in terms of yttrium oxide) were dissolved in pure water, thereby obtaining an aqueous solution having a total mass of 503.5 g.

Boehmite particles (AlO(OH), 19.6 g in terms of Al₂O₃) having a median diameter D₅₀ shown in Table 1 were added to the resulting aqueous solution and stirred to disperse the boehmite particles. Thus, a raw material solution was obtained.

The median diameter D₅₀ of boehmite particles means a particle size at which the cumulative volume is 50% in the volume-based particle size distribution of boehmite particles measured by the dynamic light scattering method. Measurement of the volume-based particle size distribution of boehmite particles by the dynamic light scattering method was carried out by dispersing boehmite particles in pure water (boehmite particles concntration: 1% by mass) and using a commercially available particle size distribution analyzer ("Zetasizer Nano ZS" manufactured by Malvern Panalytical).

The raw material solution was heated to 85°C, and a 58.7 g of 25% by mass ammonium sulfate aqueous solution was added dropwise while stirring the raw material solution. After the completion of the dropwise addition, the precipitate was matured at 85°C while stirring the raw material solution. After cooling the raw material solution to 40°C, 118.6 g of a 25% by mass sodium hydroxide aqueous solution was added dropwise while stirring the raw material solution. After the completion of the dropwise addition, the precipitate was matured, thereby obtaining a slurry.

The resulting slurry was suction-filtered, the precipitate was recovered as a cake, and the recovered cake was washed with pure water.

The washed cake was calcined in an electric furnace. The lump after calcination was pulverized, thereby obtaining a complex oxide powder containing a zirconium element, a cerium element, a lanthanum element, a neodymium element, an yttrium element, and an aluminum element.

The mass ratio of a zirconium element, a cerium element, a lanthanum element, a neodymium element, an yttrium element, and an aluminum element contained in the resulting complex oxide powder in terms of oxide (ZrO₂ : CeO₂ : La₂O₃ : Nd₂O₃ : Y₂O₃ : Al₂O₃) was 36.8 : 8.2 : 2.0 : 2.0 : 2.0 : 49.0. The amount of each metal element contained in the complex oxide powder in terms of oxide was calculated from the amount of each metal element measured by inductively coupled plasma atomic emission spectroscopy (ICP-AES) (the same applies below).

### (2) Measurement of Specific Surface Area of Complex Oxide Powder

The complex oxide powders of Examples 1 to 5 obtained in (1) above were heat-treated at 1000°C for 25 hours in an air atmosphere, and then the specific surface area of each complex oxide powder after the heat treatment was measured by the BET method. The results are shown in Table 1.

The specific surface area was measured in accordance with "(3.5) Multi-point procedures" in "6.1 Determination" of JIS R1626:1996 "Measuring methods for the specific surface area of fine ceramic powders by gas adsorption using the BET method." Nitrogen, which is an adsorption gas, was used as the gas, and five-point measurements were performed within the equilibrium relative pressure range of from 0.05 to 0.35. As a measuring device, "BELSORP-miniX" manufactured by Microtrack Bell Co., Ltd. was used.

### (3) Determination of Complex Oxide's Oxidizing Power

The complex oxide oxidizing power of the complex oxide powder of Example 1 obtained in (1) above was determined. The results are shown in Table 2.

The complex oxide oxidizability was determined as described below. The complex oxide powder was dispersed in a rhodium nitrate aqueous solution, stirred until the solvent was evaporated, and then calcined in an air atmosphere at 600°C for 1 hour, thereby obtaining a powder in which 1 part by mass of a rhodium element in terms of metal was supported on 100 parts by mass of the complex oxide. The resulting powder was heat-treated in an air atmosphere at 1000°C for 25 hours, and this was used as a sample. The sample was packed in a sample tube, heated to 800°C under an argon stream, and then cooled to 300°C. The thus obtained sample at 300°C was used to perform the following operation (A), thereby calculating the complex oxide oxidizability (hereinafter referred to as "complex oxide oxidizability (300°C)").

### [Operation (A)]

Oxygen was circulated through the sample tube, followed by helium. Thereafter, a mixed gas (1 atm, 0°C) containing 25% by volume of CO and 75% by volume of helium was circulated 15 times at a flow rate of 50 cc/min, thereby reducing CeO₂ and Rh₂O₃ contained in the sample. The amount of CO contained in the gas after contact was measured, and the amount of decrease in CO (µmol) was calculated. As a measuring device, "BELMETAL" manufactured by Microtrack Bell Co., Ltd. was used. Using the amount of decrease in CO calculated by the above-described procedure, the complex oxide oxidizability was calculated based on the following formula. The complex oxide oxidizability is an index showing the ease of reduction of complex oxide (i.e., the oxidizing power of the complex oxide).

### Complex oxide oxidizability = Amount of decrease in CO (µmol)/CeO₂ content in complex oxide (g)

Using the complex oxide oxidizability as an index, the capacity to absorb and release oxygen of the complex oxide after heat resistance can be evaluated. In other words, when a rhodium element-supporting complex oxide is brought into contact with CO/helium mixed gas as described above, the following reactions take place: (1) 2CeO₂ + CO -> Ce₂O₃ + CO₂; and (2) Rh₂O₃ + 3CO -> 2Rh + 3CO₂. Here, reaction (2) is a reaction that proceeds independent of the capacity to absorb and release oxygen of the complex oxide. Therefore, by determining the amount of decrease in CO as described above, the amount of reaction (1) dependent of the complex oxide (i.e., the capacity to absorb and release oxygen of the complex oxide) can be evaluated.

The sample after the determination of complex oxide oxidizability (300°C) was heated to 400°C under an argon stream. The thus obtained sample at 400°C was used to perform the above-described operation (A), thereby calculating the complex oxide oxidizability (hereinafter referred to as "complex oxide oxidizability (400°C)").

The sample after the determination of complex oxide oxidizability (400°C) was heated to 500°C under an argon stream. The thus obtained sample at 500°C was used to perform the above-described operation (A), thereby calculating the complex oxide oxidizability (hereinafter referred to as "complex oxide oxidizability (500°C)").

### [Example 6]

The same operation as in Example 1 was performed except that the mass ratio of a zirconium element, a cerium element, a lanthanum element, a neodymium element, an yttrium element, and an aluminum element contained in the complex oxide powder in terms of oxide (ZrO₂ : CeO₂ : La₂O₃ : Nd₂O₃ : Y₂O₃ : Al₂O₃) was changed to 26.8 : 8.2 : 2.0 : 2.0 : 5.0 : 56.0. The resulting complex oxide powder was heat-treated in an air atmosphere at 1000°C for 25 hours, and then the specific surface area of the complex oxide powder after the heat treatment was measured by the BET method. The results are shown in Table 1.

### [Example 7]

The same operation as in Example 1 was performed except that the mass ratio of a zirconium element, a cerium element, a lanthanum element, a neodymium element, an yttrium element, and an aluminum element contained in the complex oxide powder in terms of oxide (ZrO₂ : CeO₂ : La₂O₃ : Nd₂O₃ : Y₂O₃ : Al₂O₃) was changed to 26.8 : 8.2 : 0 : 7.0 : 2.0 : 56.0. The resulting complex oxide powder was heat-treated at 1000°C for 25 hours in an air atmosphere, and then the specific surface area of the complex oxide powder after the heat treatment was measured by the BET method. The results are shown in Table 1.

### [Comparative Example 1]

Pure water was added to an alumina colloidal solution containing boehmite particles having a particle size of about 10 nm (ALUMINASOL 520 manufactured by Nissan Chemical Corporation, 19.6 g in terms of Al₂O₃), thereby obtaining an acidic colloidal solution having a total mass of 245 g.

Separately from the acidic colloidal solution, cerium nitrate hexahydrate (3.3 g in terms of CeO₂), zirconium oxynitrate solution (14.7 g in terms of ZrO₂), lanthanum nitrate (0.8 g in terms of La₂O₃), neodymium nitrate (0.8 g in terms of Nd₂O₃), and yttrium nitrate (0.8 g in terms of Y₂O₃) were dissolved in pure water, thereby obtaining an aqueous solution having a total mass of 364.1 g. 28% by mass ammonia water was added to the resulting aqueous solution so as to adjust the pH to 4.

The two kinds of solutions described above were mixed, thereby obtaining a slurry. The resulting slurry was dried in an air atmosphere at 300°C for 10 hours and then calcined in an electric furnace. The lump after calcination was pulverized, thereby obtaining a complex oxide powder containing a zirconium element, a cerium element, a lanthanum element, a neodymium element, an yttrium element, and an aluminum element.

The mass ratio of a zirconium element, a cerium element, a lanthanum element, a neodymium element, an yttrium element, and an aluminum element contained in the resulting complex oxide powder in terms of oxide (ZrO₂ : CeO₂ : La₂O₃ : Nd₂O₃ : Y₂O₃ : Al₂O₃) was 36.8 : 8.2 : 2.0 : 2.0 : 2.0 : 49.0.

The resulting complex oxide powder was heat-treated in an air atmosphere at 1000°C for 25 hours, and then the specific surface area of the complex oxide powder after the heat treatment was measured by the BET method. The results are shown in Table 1.

### [Comparative Example 2]

Ammonium cerium nitrate (IV) (3.3 g in terms of CeO₂), zirconium oxynitrate solution (14.7 g in terms of ZrO₂), lanthanum nitrate (0.8 g in terms of La₂O₃), neodymium nitrate (0.8 g in terms of Nd₂O₃), and yttrium nitrate (0.8 g in terms of Y₂O₃) were dissolved in pure water, thereby obtaining an aqueous solution having a total mass of 218 g. The resulting aqueous solution was heated to 90°C.

Next, Disperal HP14/7 (Citric acid-modified boehmite particles, 19.6 g in terms of Al₂O₃) was added dropwise to pure water and stirred therein, and 28% by mass ammonia water was added so as to adjust the pH to 10, thereby obtaining a suspension having a total mass of 245 g.

The resulting suspension was slowly added dropwise to the aqueous solution described above. After the completion of dropwise addition, 28% by mass ammonia water was added so as to adjust the pH to 8.7. After stirring at 90°C for 30 minutes, the mixture was filtered, and the resulting cake was washed with pure water at 60°C. The washed cake was dried at 120°C overnight and then calcined in an electric furnace. The lump after calcination was pulverized, thereby obtaining a complex oxide powder containing a zirconium element, a cerium element, a lanthanum element, a neodymium element, an yttrium element, and an aluminum element.

The mass ratio of a zirconium element, a cerium element, a lanthanum element, a neodymium element, an yttrium element, and an aluminum element contained in the resulting complex oxide powder in terms of oxide (ZrO₂ : CeO₂ : La₂O₃ : Nd₂O₃ : Y₂O₃ : Al₂O₃) was 36.8 : 8.2 : 2.0 : 2.0 : 2.0 : 49.0.

The resulting complex oxide powder was heat-treated in an air atmosphere at 1000°C for 25 hours, and then the specific surface area of the complex oxide powder after the heat treatment was measured by the BET method. The results are shown in Table 1.

### [Comparative Example 3]

Cerium nitrate hexahydrate (3.3 g in terms of CeO₂), zirconium oxynitrate solution (14.7 g in terms of ZrO₂), lanthanum nitrate (0.8 g in terms of La₂O₃), neodymium nitrate (0.8 g in terms of Nd₂O₃), and yttrium nitrate (0.8 g in terms of Y₂O₃) were dissolved in pure water, thereby obtaining an aqueous solution having a total mass of 216.1 g.

18% by mass ammonia water was added dropwise while stirring the resulting aqueous solution so as to adjust the pH to 3. After adding 1.5 g of 30% by mass hydrogen peroxide water, 18% by mass ammonia water was further added dropwise until the pH reached 7.25. Then, the mixture was stirred for 30 minutes, thereby obtaining a slurry. The resulting slurry was filtered, and the obtained cake was washed with pure water.

The cake was slurried again with the addition of pure water, thereby obtaining a slurry having a total mass of 300 g. 28% by mass ammonia water was added dropwise to the resulting slurry so as to adjust the pH to 9.5, followed by stirring for 30 minutes. The slurry was filtered, and the resulting cake was impregnated with 31.1 g of a surfactant (Newcol 564 manufactured by Nippon Nyukazai Co., Ltd.). The impregnated cake was added to a suspension having a total mass of 450 g obtained by suspending Disperal HP14 (boehmite particles, 19.6 g in terms of Al₂O₃) in pure water while stirring so as to be slurried again. The resulting slurry was filtered, and the obtained cake was dried at 120°C overnight and then calcined in an electric furnace. The lump after calcination was pulverized, thereby obtaining a complex oxide powder containing a zirconium element, a cerium element, a lanthanum element, a neodymium element, an yttrium element, and an aluminum element.

The mass ratio of a zirconium element, a cerium element, a lanthanum element, a neodymium element, an yttrium element, and an aluminum element contained in the resulting complex oxide powder in terms of oxide (ZrO₂ : CeO₂: La₂O₃ : Nd₂O₃ : Y₂O₃ : Al₂O₃) was 36.8 : 8.2 : 2.0 : 2.0 : 2.0 : 49.0.

The resulting complex oxide powder was heat-treated in an air atmosphere at 1000°C for 25 hours, and then the specific surface area of the complex oxide powder after the heat treatment was measured by the BET method. The results are shown in Table 1.

The complex oxide oxidizability (300°C), complex oxide oxidizability (400°C), and complex oxide oxidizability (500°C) of the resulting complex oxide powder were determined in the same manner as above. The results are shown in Table 2.

### [Comparative Example 4]

Cerium nitrate hexahydrate (3.3 g in terms of CeO₂), zirconium oxynitrate solution (14.7 g in terms of ZrO₂), lanthanum nitrate (0.8 g in terms of La₂O₃), neodymium nitrate (0.8 g in terms of Nd₂O₃), and yttrium nitrate (0.8 g in terms of Y₂O₃) were dissolved in pure water, thereby obtaining an aqueous solution having a total mass of 116.3 g. A suspension having a total mass of 122 g obtained by dispersing Disperal 23N4-80 (boehmite particles, 19.6 g in terms of Al₂O₃) in pure water was added to the resulting aqueous solution, and then 10.3 g of 30% by mass hydrogen peroxide water was added thereto. The mixture was stirred for 5 minutes.

Separately from the mixture, 18% by mass ammonia water was charged in a beaker, and the mixture was added dropwise over 1 hour while stirring. The precipitate was collected by filtration and washed with pure water, thereby removing a nitrate. The cake obtained by filtration was added to pure water so as to be slurried again, thereby obtaining a slurry having a total mass of 400 g. 28% by mass ammonia water was added to the resulting slurry so as to adjust the pH to 10, followed by hydrothermal treatment at 150°C for 10 hours. After the hydrothermal treatment, 12 g of lauric acid was added over 1 hour while stirring at 70°C. The solid was collected by filtration and washed with pure water. The resulting cake was dried at 120°C overnight and then calcined in an electric furnace. The lump after calcination was pulverized, thereby obtaining a complex oxide powder containing a zirconium element, a cerium element, a lanthanum element, a neodymium element, an yttrium element, and an aluminum element.

The mass ratio of a zirconium element, a cerium element, a lanthanum element, a neodymium element, an yttrium element, and an aluminum element contained in the resulting complex oxide powder in terms of oxide (ZrO₂ : CeO₂ : La₂O₃ : Nd₂O₃ : Y₂O₃ : Al₂O₃) was 36.8 : 8.2 : 2.0 : 2.0 : 2.0 : 49.0.

The resulting complex oxide powder was heat-treated in an air atmosphere at 1000°C for 25 hours, and then the specific surface area of the complex oxide powder after the heat treatment was measured by the BET method. The results are shown in Table 1.

### [Comparative Examples 5 to 13]

A complex oxide powder was obtained in the same manner as in Examples 1 to 5, except that the aluminum element source was changed as shown in Table 1.

The resulting complex oxide powder was heat-treated in an air atmosphere at 1000°C for 25 hours, and then the specific surface area of the complex oxide powder after the heat treatment was measured by the BET method. The results are shown in Table 1.

The complex oxide oxidizability (300°C), complex oxide oxidizability (400°C), and complex oxide oxidizability (500°C) of the complex oxide powders of Comparative Examples 12 and 13 were determined in the same manner as above. The results are shown in Table 2.

**[Table 1]**

| | Aluminum element source | | Specific surface area after heat treatment |
|---|---|---|---|
| | Composition | Median diameter D₅₀ | |
| Example 1 | Boehmite (AlO(OH)) | 40 nm | 61.4 m²/g |
| Example 2 | Boehmite (AlO(OH)) | 20 nm | 63.6 m²/a |
| Example 3 | Boehmite (AlO(OH)) | 54 nm | 62.0 m²/g |
| Example 4 | Boehmite (AlO(OH)) | 160 nm | 63.2 m²/a |
| Example 5 | Boehmite (AlO(OH)) | 220 nm | 62.5 m²/a |
| Example 6 | Boehmite (AlO(OH)) | 40 nm | 69.5 m²/g |
| Example 7 | Boehmite (AlO(OH)) | 40 nm | 69.9 m²/g |
| Comparative Example 1 | Boehmite (AlO(OH)) | 100 nm | 42.3 m²/g |
| Comparative Example 2 | Boehmite (AlO(OH)) | Coarse (not measurable) | 57.9 m²/g |
| Comparative Example 3 | Boehmite (AlO(OH)) | 220 nm | 57.8 m²/g |
| Comparative Example 4 | Boehmite (AlO(OH)) | 90 nm | 57.6 m²/g |
| Comparative Example 5 | θ Alumina (Al₂O₃) | 8000 nm | 50.7 m²/g |
| Comparative Example 6 | θ Alumina (Al₂O₃) | 2000 nm | 49.5 m²/g |
| Comparative Example 7 | Boehmite (AlO(OH)) | 8000 nm | 56.1 m²/g |
| Comparative Example 8 | Boehmite (AlO(OH)) | 2000 nm | 54.5 m²/g |
| Comparative Example 9 | Boehmite (AlO(OH)) | Coarse (not measurable) | 59.2 m²/g |
| Comparative Example 10 | Boehmite (AlO(OH)) | Coarse (not measurable) | 56.1 m²/g |
| Comparative Example 11 | Water-soluble aluminum hydroxide (Al(OH)₃) | Coarse (not measurable) | 28.9 m²/g |
| Comparative Example 12 | Water-soluble aluminum hydroxide (Al(OH)₃) | Coarse (not measurable) | 34.1 m²/g |
| Comparative Example 13 | Aluminum nitrate (Al(NO₃)₃) | (Dissolved) | 46.3 m²/g |

As shown in Table 1, the specific surface areas of the complex oxides of Examples 1 to 5 which were measured by the BET method after heat treatment in an air atmosphere at 1000°C for 25 hours were 60 m²/g or more, while the specific surface areas of the complex oxides of Comparative Examples 1 to 13 which were measured by the BET method after heat treatment in an air atmosphere at 1000°C for 25 hours were less than 60 m²/g. Accordingly, it was shown that the heat resistance of the complex oxides of Examples 1 to 5 improved compared to the heat resistance of the complex oxides of Comparative Examples 1 to 13.

**[Table 2]**

| | Complex oxide oxidizability | | |
|---|---|---|---|
| | 300°C | 400°C | 500°C |
| Example 1 | 2024 | 2902 | 2945 |
| Comparative Example 3 | 1317 | 2463 | 2463 |
| Comparative Example 12 | 1195 | 2487 | 2731 |
| Comparative Example 13 | 1243 | 2195 | 2341 |

As shown in Table 2, the complex oxide oxidizability measurement result of Example 1 after heat treatment in an air atmosphere at 1000°C for 25 hours was superior to the complex oxide oxidizability measurement results of Comparative Examples 3, 12, and 13. In other words, it was shown that a complex oxide produced by the method of Example 1 is superior to complex oxides produced by conventional methods such as the methods of Comparative Examples 3, 12, and 13 in terms of capacity to absorb and release oxygen after heat resistance.

## Claims

1. A complex oxide comprising a cerium element, a zirconium element, an aluminum element, and optionally a rare earth metal element other than a cerium element,
wherein the complex oxide has a specific surface area of 60.0 m²/g or more, and
wherein the specific surface area is measured by a BET method after heat treatment in an air atmosphere at 1000°C for 25 hours.

2. The complex oxide according to claim 1, wherein an amount of an aluminum element contained in the complex oxide in terms of aluminum oxide is 60% by mass or less based on a mass of the complex oxide.

3. The complex oxide according to claim 1 or 2,
wherein the complex oxide satisfies one or two or more of the following:
(A) complex oxide oxidizability (300°C) is 1400 or more;
(B) complex oxide oxidizability (400°C) is 2600 or more; and
(C) complex oxide oxidizability (500°C) is 2800 or more,
wherein the complex oxide oxidizability (300°C), the complex oxide oxidizability (400°C), and the complex oxide oxidizability (500°C) are defined as complex oxide oxidizabilities that are determined by using samples at 300°C, 400°C, and 500°C, respectively, and
wherein the samples are each prepared by allowing the complex oxide to support 1 part by mass of a rhodium element in terms of metal on 100 parts by mass of the complex oxide, followed by heat treatment in an air atmosphere at 1000°C for 25 hours.

4. A method of producing a complex oxide, the method comprising the following steps of:
(a) preparing for a raw material solution comprising water, a cerium salt, a zirconium salt, aluminum compound particles, and optionally a rare earth metal salt other than a cerium salt;
(b) adding a precipitant to the raw material solution, thereby forming a precipitate comprising a cerium element, a zirconium element, an aluminum element, and optionally a rare earth metal element other than a cerium element; and
(c) calcining the precipitate, thereby producing a complex oxide comprising a cerium element, a zirconium element, an aluminum element, and optionally a rare earth metal element other than a cerium element,
wherein the aluminum compound particles are selected from alumina particles and alumina hydrate particles,
wherein the aluminum compound particles have a median diameter D₅₀ of from 1 nm to 220 nm, and
wherein the median diameter D₅₀ is measured by a dynamic light scattering method.

5. The production method according to claim 4, wherein all of the cerium salt, the zirconium salt, and the rare earth metal salt other than a cerium salt are water-soluble salts.

6. The production method according to claim 5,
wherein in the step (b), a first precipitant selected from: an aqueous solution containing a sulfate ion; and a compound that can dissolve in water to produce a sulfate ion is added to the raw material solution, thereby forming a first precipitate comprising a zirconium element and an aluminum element, and then a second precipitant selected from: an aqueous solution containing a hydroxide ion; and a compound that can dissolve in water to produce a hydroxide ion is added to the raw material solution, thereby forming a second precipitate comprising a cerium element, a zirconium element, an aluminum element, and optionally a rare earth metal element other than a cerium element, and
wherein in the step (c), the second precipitate is calcined, thereby producing the complex oxide.

7. The production method according to claim 6, wherein in the step (b), the first precipitant is added to the raw material solution such that a molar quantity of a sulfate ion in the raw material solution is from 0.10 times to 10 times a molar quantity of a zirconium element in the raw material solution.

8. The production method according to claim 6 or 7, wherein in the step (b), the second precipitant is added to the raw material solution such that a molar quantity of a hydroxide ion in the raw material solution is from 2.0 times to 10 times a molar quantity of an oxygen element that is required to allow each of a cerium element, a zirconium element, and a rare earth metal element other than a cerium element in the raw material solution to become oxide.

9. The production method according to claim 4, wherein both the cerium salt and the rare earth metal salt other than a cerium salt are water-soluble salts, and the zirconium salt is a poorly water-soluble salt.

10. The method according to claim 9,
wherein in the step (b), a precipitant selected from: an aqueous solution containing a hydroxide ion; and a compound that can dissolve in water to produce a hydroxide ion is added to the raw material solution, thereby forming a precipitate comprising a cerium element, a zirconium element, an aluminum element, and optionally a rare earth metal element other than a cerium element, and
wherein in the step (c), the precipitate is calcined, thereby producing the complex oxide.

11. The production method according to claim 10, wherein in the step (b), the precipitant is added to the raw material solution such that a molar quantity of a hydroxide ion in the raw material solution is from 2.0 times to 10 times a molar quantity of an oxygen element that is required to allow each of a cerium element, a zirconium element, and a rare earth metal element other than a cerium element in the raw material solution to become oxide.

12. The production method according to claim 4, wherein both the cerium salt and the rare earth metal salt other than a cerium salt are poorly water-soluble salts, and the zirconium salt is a water-soluble salt.

13. The production method according to claim 12,
wherein in the step (b), a precipitant selected from: an aqueous solution containing a sulfate ion; and a compound that can dissolve in water to produce a sulfate ion is added to the raw material solution, thereby forming a first precipitate comprising a cerium element, a zirconium element, an aluminum element, and optionally a rare earth metal element other than a cerium element, and then a reagent selected from: an aqueous solution containing a hydroxide ion; and a compound that can dissolve in water to produce a hydroxide ion is added to the raw material solution so as to treat the first precipitate with a hydroxide ion, thereby forming a second precipitate comprising a cerium element, a zirconium element, an aluminum element, and optionally a rare earth metal element other than a cerium element, and
wherein in the step (c), the second precipitate is calcined, thereby producing the complex oxide.

14. The production method according to claim 13, wherein in the step (b), the precipitant is added to the raw material solution such that a molar quantity of a sulfate ion in the raw material solution is from 0.10 times to 10 times a molar quantity of a zirconium element in the raw material solution.

15. The production method according to claim 13 or 14, wherein in the step (b), the reagent is added to the raw material solution such that a molar quantity of a hydroxide ion in the raw material solution is from 2.0 times to 10 times a molar quantity of an oxygen element that is required to allow each of a cerium element, a zirconium element, and a rare earth metal element other than a cerium element in the raw material solution to become oxide.

16. The production method according to any one of claims 4 to 15, wherein the aluminum compound particles are boehmite particles.
